# FASCICULE DE BREVET EUROPEEN

(11) **EP 3 212 498 B1**
(45) Date de publication et mention de la délivrance du brevet: **09.01.2019**
(21) Numéro de dépôt: 15805278.7
(22) Date de dépôt: 29.10.2015
(51) Int. Cl.: B63H 1/08, F03D 7/06

(54) **PERFECTIONNEMENTS AUX MACHINES TOURNANTES À ROTOR FLUIDIQUE À PALES ORIENTABLES**
VERBESSERUNGEN AN DREHMASCHINEN MIT EINEM FLUIDROTOR MIT VERSTELLBAREN SCHAUFELN
IMPROVEMENTS TO ROTATING MACHINES WITH FLUID ROTOR HAVING ADJUSTABLE BLADES

(30) Priorité: 29.10.2014 US 201462069982 P
(43) Date de publication de la demande: 06.09.2017
(73) Titulaire: ADV Tech, 33700 Merignac (FR)
(72) Inventeur: CURUTCHET, Arnaud, F-33700 Merignac (FR)
(74) Mandataire: Le Forestier, Eric
(86) Numéro de dépôt international: PCT/IB2015/058370
(87) Numéro de publication internationale: WO 2016/067251

(56) Documents cités:
- WO-A1-92/07189
- WO-A1-2014/006603
- FR-A5- 2 099 167
- GB-A- 733 087

## Description

### Domaine de l'invention

La présente invention concerne d'une façon générale les machines à rotor fluidique et plus particulièrement des perfectionnements à une machine à pales d'axes parallèles à orientation variable.

### Etat de la technique

On connaît déjà par le document WO 2014/006603A1 au nom de la demanderesse une telle machine, qui est capable par le recours à une nacelle d'orientation contrôlée, située au voisinage de l'axe respectif de chaque pale, de commander d'une manière particulièrement simple et robuste l'inclinaison de chaque pale, notamment pour réaliser des cinématiques de type Lipp ou Voith-Schneider, à usage de production d'énergie éolienne ou hydrolienne ou de propulsion d'engins dans l'eau ou dans l'air.

On connait également par le document GB733087A une machine telle que définie dans le préambule de la revendication 1.

Cette machine nécessite toutefois le recours à un arbre creux et à une tige de commande passant à l'intérieur de l'arbre, ce qui est malcommode à mettre en oeuvre.

### Résumé de l'invention

La présente invention vise à proposer une solution simple, robuste et efficace pour piloter la variation de l'amplitude maximale d'inclinaison des pales lors de la rotation du rotor.

On propose ainsi une machine tournante à rotor fluidique telle que définie dans la revendication 1.

Certains aspects préférés mais non limitatifs de cette machine sont les suivants :
* les moyens de modification sont aptes à déplacer le point d'ancrage d'une bielle sur un élément solidaire du bras et formant vilebrequin.
* les points d'ancrage des bielles sont aptes à être déplacés pour inverser les variations d'inclinaison des pales et ainsi le sens de rotation de la machine en réponse à un même flux.
* les pales sont symétriques de façon à pouvoir utiliser la machine dans deux flux de sens opposés, notamment des flux de marée.
* chaque pale présente une géométrie variable actionnée à partir d'un élément d'excentrement situé au voisinage de l'axe de rotation de la pale et dont la rotation est synchronisée avec celle du rotor.
* la machine comprend en outre un mécanisme de déport de la tringlerie à distance radiale de l'axe de chaque pale, de manière à pouvoir monter deux pales en alignement sur un même bras.
* la machine un ensemble de jeux de pales montées sur des structures disposées coaxialement, avec une tringlerie de commande commune à au moins deux pales.

On prévoit également l'utilisation d'une machine telle que définie ci-dessus pour la propulsion d'un aéronef à décollage vertical.

On prévoit enfin l'utilisation d'une machine telle que définie ci-dessus comme propulseur d'un engin aéronautique ou nautique, et comme générateur d'énergie à l'arrêt dudit engin.

### Brève description des dessins

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
Les Figures la à 1d illustrent schématiquement et en élévation de face un premier mécanisme pour faire varier l'amplitude angulaire des variations d'inclinaison d'une pale,
Les figures 2a à 2d illustrent schématiquement et en élévation de face un deuxième mécanisme pour faire varier l'amplitude angulaire des variations d'inclinaison d'une pale,
La figure 3 illustre schématiquement et en élévation de face un troisième mécanisme pour faire varier l'amplitude angulaire des variations d'inclinaison d'une pale,
La figure 4 illustre schématiquement en élévation de progil un mécanisme de commande commune de la variation de l'amplitude angulaire à l'aide d'un mécanisme du type de celui de la Figure 3,
Les Figures 5 et 6 illustrent en élévation de profil et en élévation de face un mécanisme de déport de la commande d'inclinaison des pales permettant de monter deux pales en alignement sur un même bras, ne faisant pas partie de l'invention
Les figures 7 et 8 illustrent schématiquement en vue de profil une pale à géométrie variable et sa commande, selon une évolution de l'invention,
La figure 9 illustre en vue de dessus une pale en plusieurs parties à géométrie variable, selon une autre évolution de l'invention,
Les Figures 10 à 12 illustrent de profil la pale avec trois géométries différentes,
La Figure 13 illustre en vue de dessus un catamaran équipée d'une voilure basée sur un rotor selon une évolution de l'invention,
Les Figures 14 et 15 illustrent un rotor double commandé pour sélectivement assurer une propulsion directionnelle dans un fluide,
La Figure 16 illustre schématiquement en vue de profil une solution de mise en sécurité d'un rotor à deux pales selon une évolution de l'invention,
La Figure 17 illustre un agencement pratique possible des pales d'un rotor à axe verticale selon une évolution de l'invention,
Les figures 18a à 18c illustrent en élévation schématique des architectures de support possibles pour un rotor à axe vertical à un étage de pales,
Les Figures 19a à 19j illustrent en élévation schématique des architectures de support possibles pour un rotor à axe vertical à deux ou trois étages de pales,
La figure 20 illustre schématiquement de côté un bateau à propulseur basé sur un rotor à axe vertical, et
La Figure 21 illustre schématiquement de côté un bateau à propulseur basé sur un rotor à axe horizontal.

### Description détaillée de formes de réalisation préférées

Dans la description qui suit, on réutilisera dans toute la mesure du possible les signes de référence utilisés dans WO 2014/006603A1 pour désigner les mêmes éléments ou parties, ces derniers n'étant en général pas décrits à nouveau pour éviter d'alourdir la description. Par ailleurs, d'une figure à l'autre, des éléments ou parties identiques ou similaires sont désignés dans la mesure du possible par les mêmes signes de référence, et ne seront pas décrits à nouveau à chaque fois.

On va maintenant décrire en détail différents dispositifs pour assurer le réglage de l'incidence maximale des pales en fonction de la force du vent dans un dispositif tel que décrit dans le document précité.

On rappellera ici que si en mode éolienne et en fonctionnement normal, il est nécessaire d'incliner jusqu'à une valeur proche de 90° l'incidence maximale des pales pour atteindre des rendements élevés, il peut s'avérer nécessaire, lorsque la puissance nominale de la machine est atteinte et que les performances aérodynamiques du rotor doivent être ajustées, de diminuer les valeurs des angles des pales.

Pour contrôler les angles d'incidence mini-maxi des pales, et donc modifier en temps réel les lois de calage, il est possible d'intervenir à plusieurs endroits de la chaîne cinématique, et tout particulièrement ici sur la variation de la position du point d'ancrage du pied de la bielle 13 par rapport à l'axe de rotation commun de la nacelle et du vilebrequin, comme évoqué dans WO 2014/006603A1.

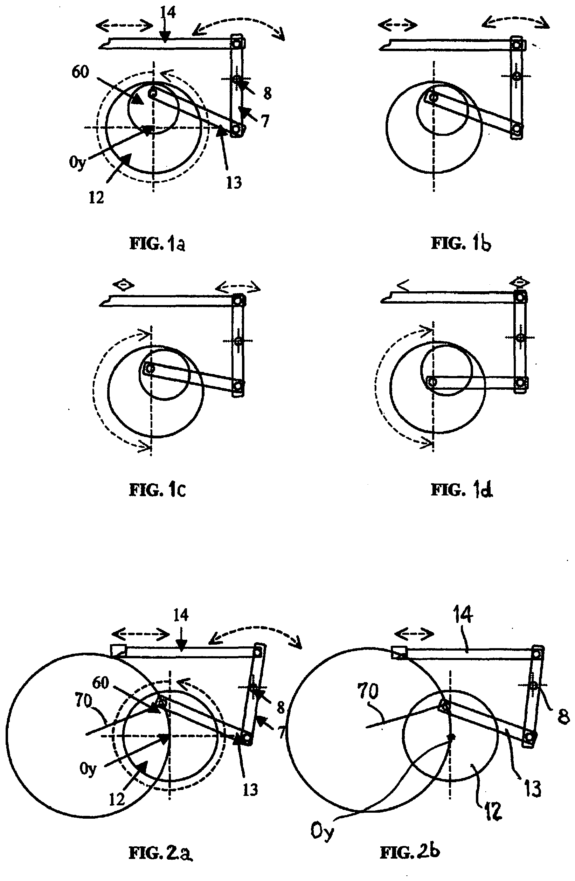

Dans une première forme de réalisation, illustrée sur les Figures 1a à 1d, on fait varier ce point d'ancrage le long d'une droite (verticale sur les figures) en montant un disque excentré 60 dans le vilebrequin 12 et en fixant l'attache de la bielle 13 sur ce disque.

En commandant la position angulaire du disque 60 (par des moyens décrits plus loin), il est possible de rapprocher le point d'ancrage de la bielle 13 de l'axe de rotation 0y de la nacelle 6 et du vilebrequin 12, et l'amplitude de la commande d'inclinaison de la pale diminue alors, jusqu'à être nul si l'ancrage de la bielle 13 est confondu avec l'axe 0y.

La position du disque excentré 60 peut être commandée manuellement ou automatiquement, par un système purement mécanique (par exemple en utilisant la force centrifuge) ou en ayant recours à l'électronique. La position angulaire du vilebrequin 12 peut également être commandée de façon coordonnée avec le pilotage du disque excentré 60 de manière à pouvoir déplacer le point d'ancrage du vilebrequin sur la droite verticale passant par 0y sur les Figures 1a à 1d.

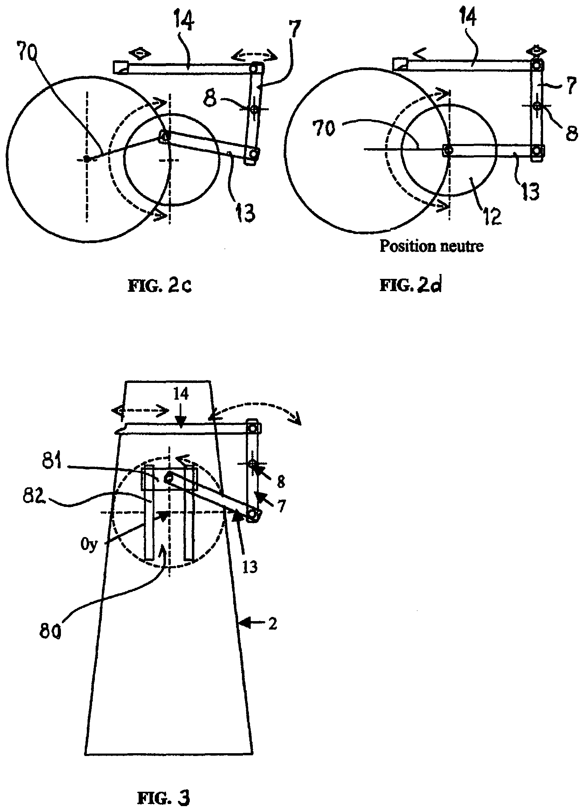

Une autre forme de réalisation consiste à faire déplacer l'ancrage du pied de la bielle 13 en montant le point d'ancrage sur à l'extrémité libre d'une biellette 70 pivotant à son extrémité opposée autour d'un axe parallèle à 0y et solidaire du bras 2, comme illustré sur les Figures 2a à 2d. En ce cas, l'ancrage de la bielle 13 se déplace sur une trajectoire circulaire passant par l'axe 0y, pour réaliser le même effet.

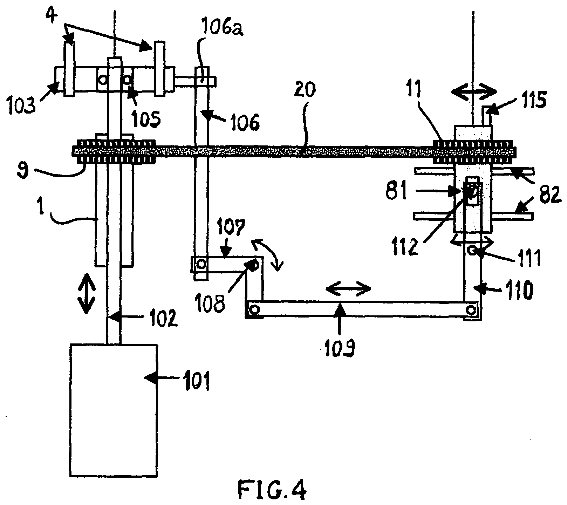

Dans une autre forme de réalisation encore, et comme illustré sur la Figure 3 qui reprend une partie de la Figure 4A du document WO 2014/006603A1, le point d'ancrage de la bielle 13 est déplacé à translation à l'aide d'un moyen de coulissement 80 comprenant un chariot 81 portant le point d'ancrage et dont le déplacement dans une glissière 82 est commandé comme on le verra dans la suite. Ici encore, la trajectoire du point d'ancrage passe par l'axe 0y.

Sur la Figure 3, le mécanisme pilotant la nacelle 6 ainsi que la nacelle ne sont pas représentés (seul l'axe de pivotement 8 solidaire la nacelle est illustré).

On notera ici que les mécanismes de déplacement de l'ancrage du pied de la bielle 13 peuvent être exploités pour inverser le sens de rotation du rotor en réponse au flux de fluide. En effet si le point d'ancrage peut occuper deux positions diamétralement opposées ou sensiblement diamétralement opposées, par rapport à l'axe 0y, alors les inclinaisons de la pale sont inversées, et la machine peut ainsi démarrer dans un sens ou dans l'autre.

Dans une autre forme de réalisation encore, non illustrée, il est possible de jouer sur la position du point d'ancrage de la tringle 14 sur la pale 4 : en éloignant ce point du centre de rotation (axe 3) de la pale, l'amplitude angulaire de la rotation est diminuée.

En référence à la Figure 4, on va maintenant décrire une forme de réalisation d'un mécanisme permettant de déplacer une pièce au bout d'un bras d'un rotor depuis une commande centrale. Ce mécanisme s'applique au déplacement du point d'ancrage de la bielle 13 sur le vilebrequin 12 dans la forme de réalisation de la Figure 3, mais peut être également appliqué au déplacement de toute autre pièce, notamment dans le cadre des évolutions du rotor telles qu'on les décrira dans la suite.

Un actuateur linéaire 101 (de type électrique, pneumatique, mécanique, etc.) commande la translation d'un axe 102 dans un logement situé dans l'axe principal 1 du rotor. L'axe 102 permet d'actionner un plateau 103 qui coulisse sur un ensemble de guides 104 et qui solidaire de la partie tournante du rotor. Selon ce mode de réalisation, l'axe 102 étant prévu pour ne pas tourner avec le rotor, un roulement 105 supportant de façon appropriée les efforts axiaux est utilisé pour réaliser la jonction entre l'axe 102 et le plateau 103.

Sur le plateau 103 est prévue, pour chaque bras 2 du rotor, une liaison 106a permettant de transmettre le mouvement du plateau à une tringle 106. L'autre extrémité de la tringle 106 est articulée à un renvoi 107 qui pivote autour d'un axe 108 solidaire du bras 2 (non illustré) qui supporte la pale. Sur l'autre extrémité du renvoi 107 est fixée une autre tringle 109 qui est articulée à son autre extrémité à un renvoi 110 qui pivote autour d'un axe 111 solidaire du bras 2. Au bout de ce renvoi 110 est monté un axe 112 qui coulisse dans un trou par exemple oblong réalisé dans le chariot 81 coulissant dans la glissière 82 matérialisée ici par deux guides parallèles solidaires du bras 2. A l'autre extrémité du chariot 82 est monté l'axe 115 constituant le pied de la bielle 13.

Lorsque l'actionneur 101 déplace l'axe 102 en translation, l'axe 115 en bout de bras se translate sur une ligne parallèle au bras 2 (qui s'étend horizontalement sur la Figure 4), ce qui permet de rapprocher ou d'éloigner l'axe 115 du centre de rotation 0y du mécanisme de la pale pour ainsi assurer l'effet désiré de variation de l'amplitude angulaire des changements d'inclinaison de la pale lors de la rotation du rotor.

On va maintenant décrire un certain nombre d'autres évolutions de la machine décrite dans WO 2014/006603A1Ces évolutions peuvent être mises en oeuvre indépendamment les unes des autres et indépendamment du pilotage de l'inclinaison maximale des pales tel que décrit dans ce qui précède.

### Mécanisme déporté par rapport au prolongement de la pale

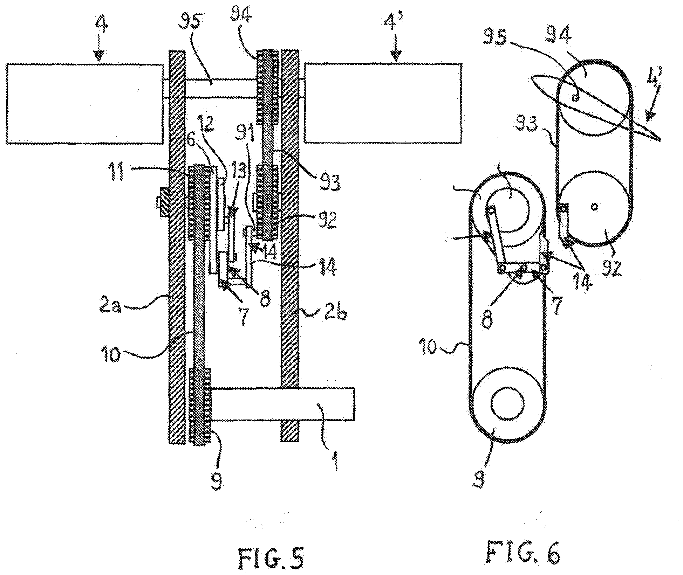

On comprend que si l'on souhaite faire soutenir deux pales 4, 4' par le même bras, il est nécessaire de déporter le mécanisme de commande de l'orientation des pales. Un tel déport est illustré sur les Figures 5 et 6, où en l'espèce le bras est subdivisé en deux branches 2a et 2b. Ce déport est réalisé à l'aide d'une transmission à courroie ou à chaîne, ou encore d'un jeu de pignons, entre la tringle 14 et les pales 4 et 4'. Dans le cas d'espèce, l'extrémité de la tringle 14 opposée au palonnier 7 est reliée par un axe 91 à une première roue crantée 92 qui engrène avec une courroie crantée 93 qui elle-même engrène avec un autre roue crantée 94 solidaire en rotation d'un arbre 95 portant les pales 4, 4'. De la sorte, les mouvements de l'extrémité de la tringle 14 pour faire varier l'inclinaison des pales sont engendrés à distance de l'axe des pales 4, 4' et reportés vers cet axe.

On observera ici que la Figure 6 a été décomposée en deux parties (cf. tringle 14 en deux parties décalées) par souci de clarté.

On notera la possibilité de monter un amortisseur et/ou un limiteur de couple entre la roue crantée 94 qui joue le rôle du guignol 15 du document WO 2014/006603A1.

### Pilotage de volets et becs sur les pales

Selon cette évolution, chaque pale 4 est munie dans d'une ou plusieurs parties mobiles destinées à optimiser son comportement aérodynamique ou hydrodynamique, tant en mode générateur qu'en mode propulseur, et notamment à améliorer le rendement du rotor.

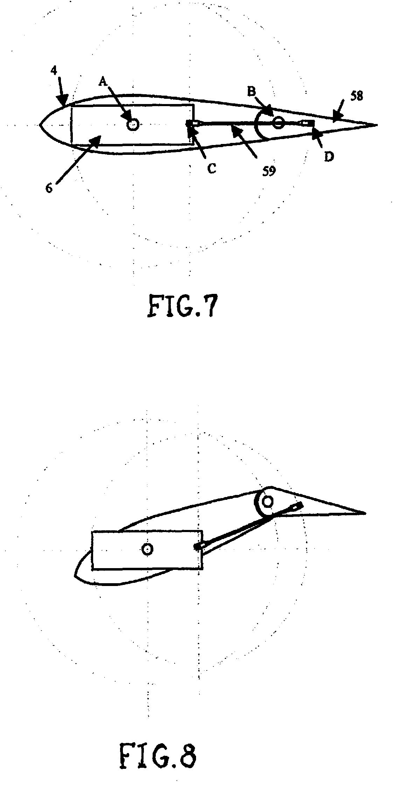

Dans une forme de réalisation possible et en référence aux Figures 7 et 8, la région du bord de fuite de la pale 4 est munie d'un volet articulé 58 dont l'inclinaison peut varier de part et d'autre d'une position médiane donnant à l'ensemble par exemple un profil standard NACA.

La pale 4 est apte à pivoter autour de son axe A, tandis que le volet 58 pivote autour d'un axe B porté par la pale. Sur la nacelle 6, qui pivote sur l'axe A, est montée à pivotement en C une première extrémité d'une tringle de commande 59 dont l'autre extrémité est montée à pivotement en D sur le volet 58 de façon excentrée par rapport à son axe de pivotement B. La Figure 8 montre comment la nacelle 6, qui en mode Lipp conserve une orientation absolue constante, peut ainsi directement piloter la position du volet 58.

On comprend qu'en modifiant les positions respectives des axes A, B, C et D et la longueur de la tringle 59, il est possible faire varier à souhait la loi de pilotage du volet. A cet égard, on peut adapter la tringlerie pour que le sens de basculement du volet soit inversé par rapport au cas des Figures 7 et 8.

Le volet peut selon un mode de réalisation être constitué par une simple voile analogue à une voile de voilier. Dans ce cas cette dernière peut être montée sur enrouleur, ce qui est un moyen supplémentaire pour adapter la voilure aux conditions météo.

A partir de ce principe de pilotage, il est possible de prévoir plusieurs volets, et également un ou plusieurs becs d'orientation variable dans la région du bord d'attaque de la pale, pour améliorer encore le profil.

### Pale en plusieurs parties

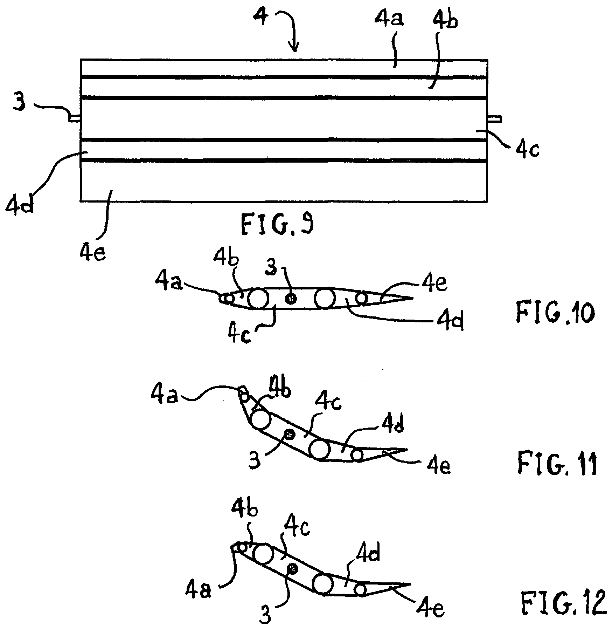

Selon cette évolution du rotor, chaque pale est constituée de plusieurs parties montées sur articulations dans le sens de la longueur. La Fig. 9 montre à titre d'exemple et schématiquement (sans la commande ni les articulations) une vue de dessus d'une version avec un bec en deux parties 4a, 4b, une partie principale 4c par laquelle la pale est montée sur son axe 3, et un aileron en deux parties 4d, 4e, sans que ces nombres soient restrictifs. La Fig. 12 est une vue de côté où les éléments 4a-4e sont agencés en alignement mutuel pour donner à la pale un profil de base, par exemple symétrique de type NACA.

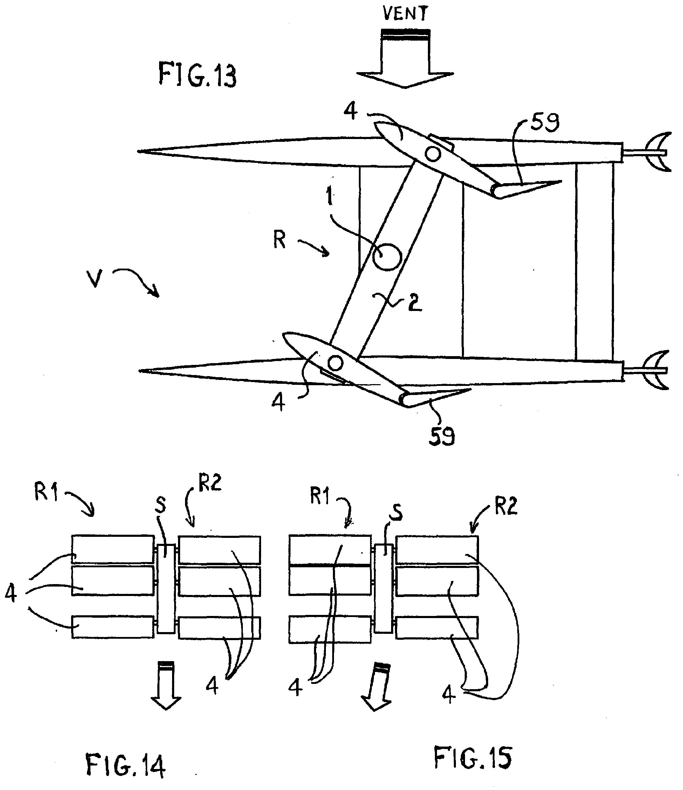

Sur la Figure 13, le profil est asymétrique en « C » tandis que sur la Figure 14, le profil est asymétrique en « S ».

Les mouvements des différents becs et volets peuvent être pilotés électroniquement par des actionneurs électrique, ou encore par une tringlerie appropriée, ou encore par tout autre moyen inspiré des commandes aéronautiques (tringle, vérin hydraulique/électrique, renvois, câbles, poussoirs, etc.). Ces différentes commandes peuvent être pilotées à partir de la nacelle 6 ou en exploitant le mouvement du renvoi piloté par la bielle 13, ou encore à l'aide d'un mécanisme du type de celui illustré sur la Figure 4.

La partie centrale 4c de la pale 4 est liée mécaniquement à la nacelle 6 de sorte que ces deux parties forment toujours le même angle.

Dans une variante, la partie centrale 4c peut être réalisée en deux parties pivotant chacune sur l'axe 3 de façon contrôlée.

### Blocage du rotor

En bloquant le rotor, on peut utiliser celui-ci en voilure fixe d'un aéronef (pour réaliser la portance) ou d'un voilier (pour réaliser la propulsion par la force vélique).

Le blocage du rotor peut être réalisé par un mécanisme de frein ou de butée agissant sur l'ensemble du rotor, ou en inclinant les pales pilotées avec la commande de l'axe central fixe sur lequel sont montées les chaînes ou courroies de transfert de rotation.

La Fig. 13 illustre ainsi en vue de dessus un voilier V de type catamaran avec un rotor R à axe vertical comprenant deux pales 4 avec volets 59 montées aux extrémités d'un bras diamétral 2, les parties principales des pales étant orientées dans le sens tangentiel et les volets 59 tournés vers le vent. Le rotor est bloqué à un angle ici d'environ 30° par rapport à l'axe du voilier V, sous vent de travers.

Cette configuration permet de réaliser des voiliers performants qui peuvent servir pour le loisir et la plaisance et qui sont en même temps capables de fournir de l'énergie une fois amarrés, en libérant le rotor et en le couplant à une génératrice.

On peut faire varier le nombre de rotors embarqués ainsi que le nombre de pales de chaque rotor.

Par ailleurs, en l'absence de vent ou en cas de vent insuffisant, le rotor peut être entraîné en rotation à l'aide de la génératrice, utilisée en moteur, ou d'un moteur dédié, de manière à mouvoir le bateau par propulsion aérienne, donc sans action sur l'eau, ce qui permet un déplacement particulièrement silencieux.

Cette utilisation d'un rotor selon l'invention s'applique à toute architecture de bateau (monocoque, multicoque, avec ou sans foil(s)).

Dans le cas des aéronefs, les configurations possibles sont multiples. On peut prévoir des aéronefs pourvus d'un seul rotor comme des versions multi-rotors. Le couple généré par le ou les rotors est compensé, ce qui permet d'établir la position des rotors les uns par rapport aux autres, et de déterminer leur axe de rotation.

Le ou les rotors peuvent être bloqués dans différentes positions pour être utilisés en voilure fixe pour accroître la portance. Le pilotage des pales avec volets s'effectue comme dans le cas du voilier.

Toujours dans le cas d'un aéronef, et en référence aux Figures 14 et 15, on peut prévoir un rotor à réglage asymétrique, avec deux jeux de pales (parties de rotor R1 et R2) situés de part et d'autre d'une commande et de support S (bras/nacelles/transmissions) disposée centralement. La loi de calage de l'angle des pales au niveau de la partie de rotor R1 est commandée indépendamment de celle des pales au niveau de la partie de rotor R2. Ceci permet d'orienter le flux de poussée soit dans l'axe de l'aéronef (Figure 14, lois de calage identiques), soit avec un angle (Figure 15, lois de calage différentes avec une poussée plus forte au niveau de la partie de rotor R2), et ceci sans avoir besoin de modifier l'orientation du rotor.

Par ailleurs on peut accoupler deux rotors adjacents partageant le même axe de rotation et tournant avec des sens de rotation opposés pour annuler leurs couples respectifs sur l'aéronef, de manière à obtenir avec deux rotors seulement l'avantage sur ce plan d'un aéronef quadri-rotors.

On peut également prévoir un amarrage en altitude d'un drone équipé d'un rotor selon l'invention, qui relié à un générateur peut réaliser une recharge de la batterie du drone et ainsi améliorer son autonomie.

Un bateau équipé d'un propulseur selon l'invention (voir plus loin) peut aussi, amarré, utiliser le propulseur pour recharger ses batteries en présence d'un courant marin.

### Procédures de dégradation des performances aérodynamiques pour rester à la puissance nominale

Les mesures effectuées en soufflerie montre qu'avec une éolienne de type Lipp, le maximum du coefficient de performance Cp est obtenu pour un rapport de vitesse en bout de pale (« Tip Speed Ratio » en terminologie anglo-saxonne ou TSR) voisin de 0,6. Pour des valeurs du TSR proches de 0 ou proches de 1, la valeur du coefficient Cp diminue fortement jusqu'à devenir nul. Le fait que le rotor en mode générateur ne puisse jamais dépasser un TSR de 1 représente un avantage important, notamment pour la sécurité : si le rotor se trouve entièrement libéré (par exemple en cas de rupture de la transmission entre le rotor et la génératrice), jamais il ne s'emballera.

Pour atteindre ce but (en application éolienne), plusieurs approches sont possibles :
- diminuer les angles des pales, à l'aide de l'un des mécanismes décrits plus haut, et/ou modifier leur géométrie dans le cas de pales en plusieurs parties articulées,
- freiner la machine en augmentant la charge sur la génératrice,
- libérer le rotor en diminuant la charge sur la génératrice (solution la plus simple), de manière à ce qu'il prenne plus de tours/min, avec par conséquent une diminution du Cp (solution que l'on peut combiner à une diminution de l'angle d'incidence des pales).

### Procédures d'urgence - arrêt par vent fort

Les procédures pour arrêter le rotor peuvent être diverses et dépendent étroitement de l'architecture du rotor sur lesquelles elles s'appliquent. Les solutions sont notamment :
- freinage du rotor puis mise en drapeau (libération) des pales à l'aide d'un mécanisme de débrayage (ensemble ou l'une après l'autre) ;
- freinage du rotor puis blocage des pales dans une position forcée face au vent ;

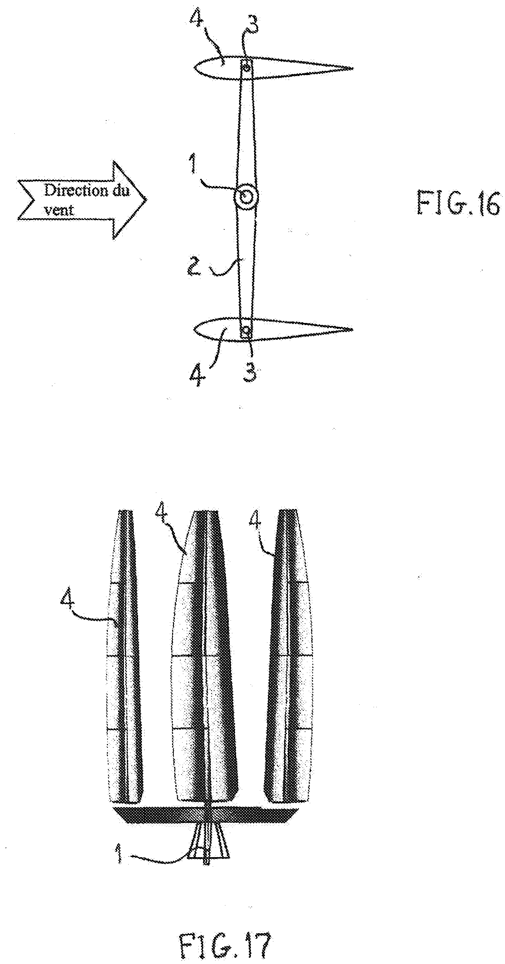

Sur une version à une ou deux pales, il est également possible de bloquer le rotor dans la position pour laquelle les deux pales demeurent face au vent, comme l'illustre la Fig. 16. Cette solution permet de simplifier le rotor car les mécanismes de pilotage des angles extrema d'inclinaison des pales peuvent éventuellement être supprimés.

Sur des versions de rotors possédant plus de deux pales, la mise en drapeau des pales ou la diminution de l'inclinaison des pales à l'aide de l'un des mécanismes décrits plus haut est plus appropriée.

Des procédures d'urgence similaires peuvent être utilisées pour la récupération de l'énergie des courants fluviaux ou marins, en cas de courant anormalement élevé.

### Machine bidirectionnelle

Selon un autre mode de réalisation, par exemple dans le cas d'une hydrolienne pour application marine ou fluviale, il est possible de maintenir la machine d'une manière fixe (perpendiculaire) par rapport à la direction du flux et donc de s'affranchir du système d'orientation des pales par rapport à la direction du flux : en effet, dans un premier sens du flux (par exemple quand la marée descend), le rotor tourne dans un sens, et dans le sens opposé du flux (quand la marée monte), le rotor tourne dans l'autre sens. Il peut dans ce cas paraître opportun de fixer l'axe de rotation 3 de chaque pale 4 au milieu de la pale et d'utiliser un profil de pale symétrique non seulement au niveau de l'extrados et de l'intrados, mais aussi au niveau du bord d'attaque et du bord de fuite (par exemple une forme elliptique aplatie). Même si les performances globales de la machine peuvent s'en trouver réduites, la mise en oeuvre est grandement simplifiée et rendue plus économique.

### Réalisation des pales

On peut utiliser des techniques de mâts-ailes par exemple du type développé pour le nautisme. Une approche consiste à assembler autour du mât une ossature et à réaliser sur cette ossature une peau avec les matériaux servant à la réalisation des voiles classiques (toile, Mylar®, etc.). Cette technique permet donc de donner du volume au mât-aile, et de réaliser toutes sortes de profils, par exemple NACA18. Cette technologie permet donc de faire des pales de grandes dimensions avec un poids réduit.

La Fig. 17 illustre ainsi une éolienne à axe vertical avec trois pales 4 de type mât-aile comme précité.

### Applications éoliennes, proposition d'architecture

Bien que les éoliennes selon le document WO 2014/006603A1 ou selon les perfectionnements décrits ici puissent être déclinées en mode horizontal, l'exploitation en mode vertical présente de nombreux avantages. En effet, dans cette configuration, la génératrice peut être montée au plus bas, ce qui représente un net avantage pour les applications off-shore car le centre de gravité est ainsi abaissé. En outre l'orientation des pales face au vent est comme mentionné plus haut est facilitée. Les configurations proposées ci-dessous sont données pour des versions à axe vertical mais peuvent bien entendu être déclinées en axe horizontal.

Ainsi :

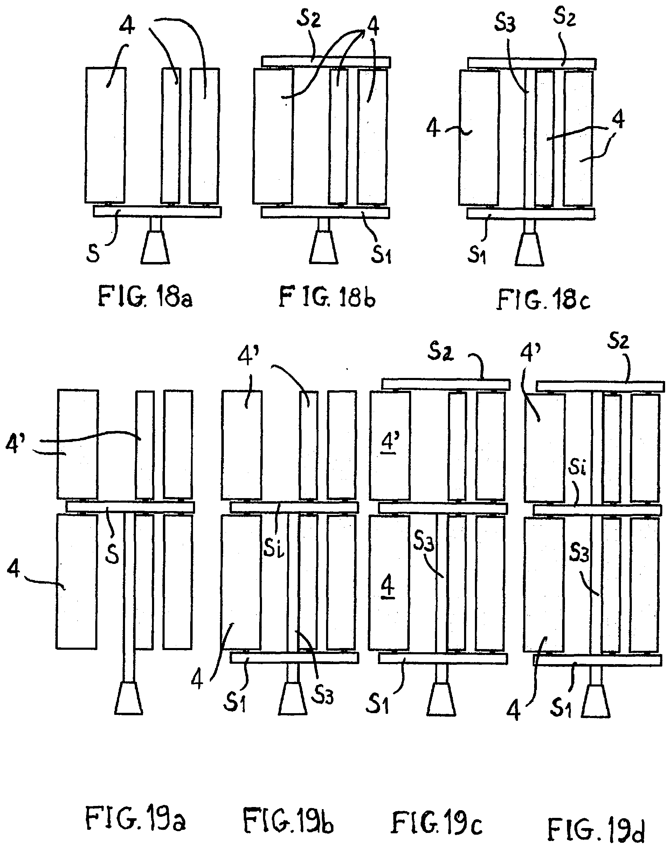

- la Fig. 18a illustre une réalisation à pales simples 4 montées en porte-à-faux vers le haut à partir d'une structure S de support et de commande,
- la Fig. 18b illustre une réalisation à pales simples 4 retenues à leurs deux extrémités par deux structures de support S1 et S2, dont l'une de préférence celle située en bas) est équipée des moyens de commande de l'inclinaison des pales, et
- la Fig. 18c illustre une réalisation à pales simples retenues à leurs deux extrémités, avec un axe central S3 reliant les structures d'extrémités S1 et S2.

De nombreuses autres configurations sont possibles, comme illustré sur les Figs. 17a à 17j, avec deux ou trois étages de pales (4, 4' ; 4, 4', 4" ; etc.) voire davantage, et différentes répartitions de structures entre une structure inférieure S1, une ou plusieurs structures intermédiaires Si ; SiN et une structure supérieure S2, avec le cas échéant un axe structurel S3.

On notera des architectures similaires peuvent être envisagées pour des hydroliennes.

### Application à la propulsion des navires - proposition d'architecture

Une solution préférée pour la propulsion des navires consiste à utiliser deux rotors à axe vertical tournant dans les sens opposés afin d'annuler leurs couples respectifs. Le contrôle corrélé ou indépendant des deux rotors permet de diriger le navire dans les différentes directions et ainsi de supprimer le ou les gouvernails, les inverseurs de marche, voire les propulseurs d'étrave.

La Fig. 18 est une vue de côté du navire N avec deux rotors arrières d'axes verticaux R1, R2 (un seul étant visible).

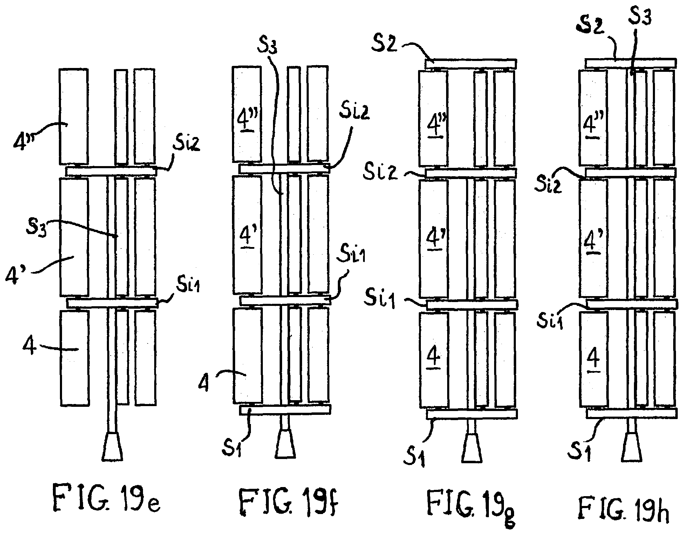

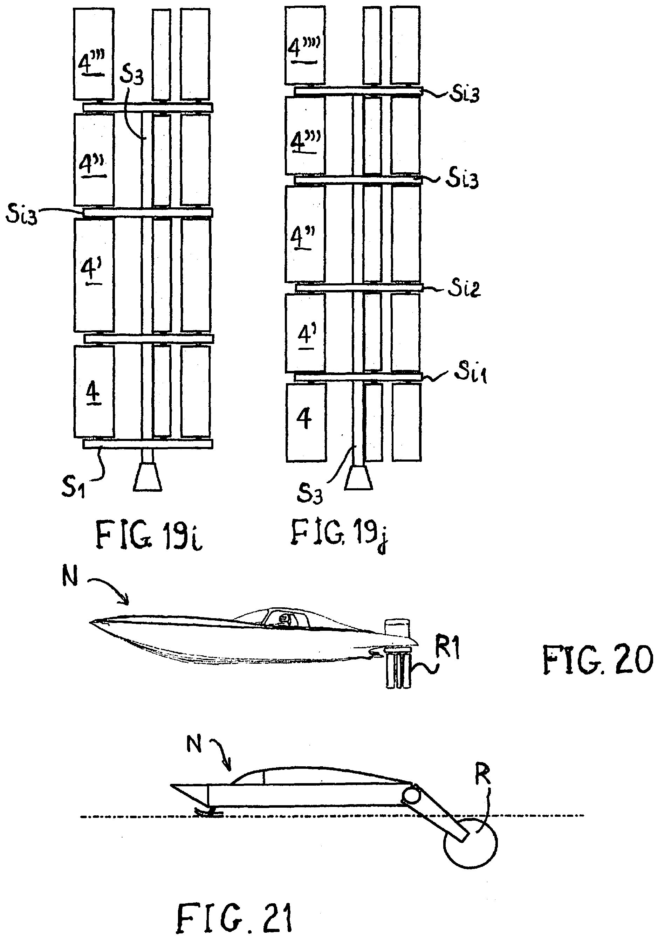

La Fig. 19 illustre une version où le rotor R est orienté avec son axe de rotation horizontal. Le réglage du trim devient possible en faisant tourner la structure autour de son axe horizontal. Un gouvernail est dans ce cas nécessaire, du moins si un rotor unique est prévu, pour diriger le navire.

### Application à la propulsion des aéronefs : décollage vertical/vol horizontal

Un aéronef à décollage et atterrissage verticaux ADAV (en anglais Vertical Take-off and Landing aircraft ou VTOL) est un aéronef à voilure fixe conçu pour s'affranchir des pistes qui lui sont normalement nécessaires pour le décollage et l'atterrissage. Ce type d'avion est parfois appelé hybride ou convertible, notamment dans le cas d'avions à moteurs basculants de type « tiltrotor ».

On appelle « transition » le moment pendant lequel un ADAV passe du vol vertical au vol horizontal à l'issue du décollage, ou du vol horizontal au vol vertical avant l'atterrissage. La première transition est très délicate car la portance doit être transférée des moteurs aux ailes ; or les ailes ne jouent leur rôle qu'à condition que la vitesse horizontale de l'avion soit suffisante. Le basculement se fait donc de façon progressive.

Les rotors selon WO 2014/006603A1 ou selon certains perfectionnements décrits ici permettent d'orienter facilement le flux dans toute direction souhaitée : ils sont donc très adaptés pour la réalisation d'engins capables de décoller (et de se poser) à la verticale et de passer en mode de vol horizontal. Par combinaison de plusieurs rotors contrôlés en vitesse de rotation et/ou en lois de calage, il est possible de contrôler la poussée dans un plan supplémentaire. Comme indiqué plus haut en référence à la Figure XX, un même rotor avec commande séparée des lois de calage à droite et à gauche permet de le faire. Un seul moteur peut entraîner deux de ces rotors, en sens inverses (pour annuler le couple) et les piloter séparément, ce qui permet de gérer le vol stationnaire.

En outre, la faible vitesse de rotation par rapport aux hélices des ADAV conventionnels permet de réaliser des aéronefs plus silencieux.

Par ailleurs, l'invention permet de réaliser des drones capables d'une part de se mouvoir grâce aux rotors, mais également de recharger leurs batteries via ces mêmes rotors utilisés en éoliennes une fois posés. Cette solution permet d'envisager des missions sur de très longues durées et sur de grandes distances.

De la même manière, des engins nautiques ou subaquatiques de grande autonomie peuvent être réalisés. A propos des sous-marins, la faible vitesse de rotation des rotors les rend quasiment indétectables.

## Revendications

1. Machine tournante à rotor fluidique, comprenant un ensemble de pales (4) montées sur des bras (2) tournant autour d'un axe principal (1) du rotor, le rotor étant maintenu par une structure porteuse (5) dans une orientation telle que ledit axe (1) soit essentiellement perpendiculaire à la direction du flux du fluide, chaque pale (4) étant montée pivotante autour d'un axe de rotation respectif (3) parallèle à l'axe principal (1), la machine comprenant une tringlerie (13, 7, 14) pour générer un mouvement de rotation relatif de chaque pale (4) par rapport à son bras (2) au niveau de son axe de rotation (3), pour ainsi faire varier l'inclinaison de la pale par rapport au flux de fluide dans un intervalle angulaire, la machine comprenant des moyens pour modifier collectivement la géométrie des tringleries (13, 7, 14) à partir d'un mouvement généré au niveau de l'axe principal du rotor pour faire varier l'amplitude de l'intervalle angulaire,
machine **caractérisée en ce que** les moyens de modification comprennent un élément de commande apte à être déplacé axialement le long de l'axe principal (1) et un ensemble de tringleries de renvoi (106-110) respectivement associées aux bras (2).

2. Machine selon la revendication 1, dans laquelle les moyens de modification sont aptes à déplacer le point d'ancrage d'une bielle (13) sur un élément (12) solidaire du bras (2) et formant vilebrequin.

3. Machine selon la revendication 2, dans laquelle les points d'ancrage des bielles (13) sont aptes à être déplacés pour inverser les variations d'inclinaison des pales et ainsi le sens de rotation de la machine en réponse à un même flux.

4. Machine selon l'une des revendications 1 à 3, dans laquelle les pales sont symétriques de façon à pouvoir utiliser la machine dans deux flux de sens opposés, notamment des flux de marée.

5. Machine selon l'une des revendications 1 à 4, dans laquelle chaque pale présente une géométrie variable actionnée à partir d'un élément d'excentrement (6) situé au voisinage de l'axe de rotation de la pale et dont la rotation est synchronisée avec celle du rotor.

6. Machine selon l'une des revendications 1 à 5, comprenant en outre un mécanisme (92-95) de déport de la tringlerie à distance radiale de l'axe de chaque pale, de manière à pouvoir monter deux pales en alignement sur un même bras.

7. Machine selon l'une des revendications 1 à 6, comprenant un ensemble de jeux de pales montées sur des structures disposées coaxialement, avec une tringlerie de commande commune à au moins deux pales.

8. Utilisation d'une machine selon l'une des revendications 1 à 7 pour la propulsion d'un aéronef à décollage vertical.

9. Utilisation d'une machine selon l'une des revendications 1 à 7 comme propulseur d'un engin aéronautique ou nautique, et comme générateur d'énergie à l'arrêt dudit engin.

## Patentansprüche

1. Drehmaschine mit Fluidrotor, mit einer Anordnung von Schaufeln (4), die an Armen (2) montiert sind, die sich um eine Hauptachse (1) des Rotors drehen, wobei der Rotor durch eine Tragstruktur (5) in einer Ausrichtung derart gehalten ist, dass die Achse (1) im Wesentlichen senkrecht zu der Strömungsrichtung des Fluids steht, wobei jede Schaufel (4) schwenkbar um eine jeweilige Drehachse (3) parallel zu der Hauptachse (1) montiert ist und die Maschine ein Gestänge (13, 7, 14) umfasst, um eine relative Drehbewegung jeder Schaufel (4) relativ zu ihrem Arm (2) an ihrer Drehachse (3) zu erzeugen, um derart die Neigung der Schaufel relativ zu der Fluidströmung in einem Winkelintervall zu variieren, wobei die Maschine Mittel zum gemeinsamen Modifizieren der Geometrie der Gestänge (13, 7, 14) aus einer an der Hauptachse des Rotors erzeugten Bewegung umfasst, um die Amplitude des Winkelintervalls zu variieren,
**dadurch gekennzeichnet, dass** die Mittel zum Modifizieren ein Steuerelement, das axial entlang der Hauptachse (1) verschiebbar ist, und eine Anordnung von jeweils den Armen (2) zugeordneten Umlenkgliedern (106-110) umfassen.

2. Maschine nach Anspruch 1, bei der die Mittel zum Modifizieren dazu ausgelegt sind, den Verankerungspunkt einer Pleuelstange (13) an einem mit dem Arm (2) einstückigen Element (12) zu bewegen und eine Kurbelwelle zu bilden.

3. Maschine nach Anspruch 2, bei der die Verankerungspunkte der Pleuelstangen (13) beweglich sind, um die Schwankungen einer Neigung der Schaufeln und damit die Drehrichtung der Maschine als Reaktion auf eine gleiche Strömung umzukehren.

4. Maschine nach einem der Ansprüche 1 bis 3, bei der die Schaufeln symmetrisch sind, derart dass die Maschine in zwei entgegengesetzten Strömungen, insbesondere Gezeitenströmungen, eingesetzt werden kann.

5. Maschine nach einem der Ansprüche 1 bis 4, bei der jede Schaufel eine variable Geometrie aufweist, die von einem exzentrischen Element (6) betätigt wird, das sich in der Nähe der Drehachse der Schaufel befindet und dessen Drehung mit der des Rotors synchronisiert ist.

6. Maschine nach einem der Ansprüche 1 bis 5, die des weiteren einen Mechanismus (92-95) zum Versatz des Gestänges in radialer Entfernung von der Achse jeder Schaufel umfasst, um zwei Schaufeln in Ausrichtung auf demselben Arm montieren zu können.

7. Maschine nach einem der Ansprüche 1 bis 6, mit einer Anordnung von Sätzen von Schaufeln, die auf koaxial angeordneten Strukturen montiert sind, mit einem für mindestens zwei Schaufeln gemeinsamen Steuergestänge.

8. Verwendung einer Maschine nach einem der Ansprüche 1 bis 7 zum Antrieb eines Vertikalstartflugzeugs.

9. Verwendung einer Maschine nach einem der Ansprüche 1 bis 7 als Antriebsorgan für ein Wasser- oder Luftfahrzeug und als Energieerzeuger beim Stillstand des genannten Fahrzeugs.

## Claims

1. A fluid rotor rotary machine, comprising a set of blades (4) mounted on arms (2) rotating about a main axis (1) of the rotor, the rotor being held by a support structure (5) in an orientation such that said axis (1) is essentially perpendicular to the direction of the fluid flow, each blade (4) being pivotally mounted about a respective rotation axis (3) parallel to the main axis (1), the machine comprising a linkage (13, 7, 14) for generating a relative rotational movement of each blade (4) with respect to its arm (2) at the rotation axis (3) thereof, for thereby varying the pitch of the blade with respect to the fluid flow in an angular interval, the machine comprising means for collectively modifying the geometry of the linkages (13, 7, 14) from a movement generated at the main axis of the rotor so as to vary the magnitude of the angular interval,
The machine being **characterized in that** the modification means comprise a control member capable of being displaced axially along the main axis (1) and a set of redirection linkages (106-110) respectively associated with the arms (2).

2. The machine as claimed in claim 1, wherein the modification means are capable of displacing the anchor point of a connecting rod (13) on a member (12) affixed to the arm (2) and forming a crankshaft.

3. The machine as claimed in claim 2, wherein the anchor points of the connecting rods (13) are capable of being displaced for reversing the pitch variations of the blades and thus the rotation direction of the machine in response to one same flow.

4. The machine as claimed in one of claims 1 to 3, wherein the blades are symmetrical so that the machine can be used in two flows of opposite directions, in particular tidal flows.

5. The machine as claimed in one of claims 1 to 4, wherein each blade has a variable geometry actuated from an off-centering member (6) located in the vicinity of the blade rotational axis and the rotation of which is synchronized with that of the rotor.

6. The machine as claimed in one of claims 1 to 5, further comprising a mechanism (92-95) for offsetting the linkage at a radial distance from the axis of each blade, whereby two blades can be mounted in alignment on a same arm.

7. The machine as claimed in one of claims 1 to 6, comprising a plurality of blade sets mounted on coaxially arranged structures, with a control linkage common to at least two blades.

8. Use of a machine as claimed in one of claims 1 to 7 for the propulsion of a vertical takeoff aircraft.

9. Use of a machine as claimed in one of claims 1 to 7 as a thruster of an aircraft or a watercraft, and as a power generator when said aircraft or watercraft is still.
